# EUROPÄISCHE PATENTSCHRIFT

(11) **EP 3 396 257 B1**
(45) Veröffentlichungstag und Bekanntmachung des Hinweises auf die Patenterteilung: **28.10.2020**
(21) Anmeldenummer: 18167783.2
(22) Anmeldetag: 17.04.2018
(51) Int. Cl.: F24D 3/14

(54) **ROHRLEITUNGSPANEL UND FUSSBODENAUFBAU**
PIPE CONDUIT PANEL AND FLOOR STRUCTURE
ENSEMBLE DE CONDUITES ET STRUCTURE DE PLANCHER

(30) Priorität: 27.04.2017 DE 202017102504 U
(43) Veröffentlichungstag der Anmeldung: 31.10.2018
(73) Patentinhaber: Uponor Innovation AB, 73061 Virsbo (SE)
(72) Erfinder: Lipinski, Johann, 22926 Ahrensburg (DE); Hemmersbach, Matthias, 58675 Hemer (DE)
(74) Vertreter: Epping - Hermann - Fischer

(56) Entgegenhaltungen:
- EP-A1- 3 112 549
- WO-A1-2008/020695
- DE-U1-202016 002 037
- US-A1- 2014 096 763

## Beschreibung

Die Erfindung betrifft ein Rohrleitungspanel zum Führen einer Anbinderohrleitung eines Fußbodenheizungssystems. Die Erfindung betrifft des Weiteren einen Fußbodenaufbau.

Aus dem Stand der Technik sind Rohrleitungspanele zum Aufbau von Fußbodenheizungssystemen bekannt. Beispielsweise werden bei der sogenannten Nassverlegung gemäß dem Typ A Rohrleitungen zum Durchfließen mit einem Temperiermedium mittels Halterungen auf einer Dämmschicht befestigt und nachfolgend mit einem Estrich vergossen.

Die DE 20 2016 002 037 U1 offenbart ein System zur Flächentemperierung in Bereichen mit durchlaufenden Zuleitungen bzw. Anbindeleitungen für Heizkreisverteiler von Flächentemperierungen, dadurch gekennzeichnet, dass ein Anbindeleitungselement und ein Abdeckelement vorgesehen sind, wobei in das Anbindeleitungselement Rohrführungskanäle für durchlaufende Zuleitungen bzw. Anbindeleitungen einschneidbar sind, das Abdeckelement auf das Anbindeleitungselement mit den eingeschnittenen Rohführungskanälen aufbringbar ist, wozu das Abdeckelement an seiner Unterseite eine selbstklebende Schicht aufweist, wobei das Abdeckelement auf seiner Oberseite mit Mitteln versehen ist, die zur Befestigung und Verlegung von Rohren eines Heizkreises der Flächentemperierungen geeignet sind.

Die WO 2008/020695 A1 betrifft ein Kühl-/Heizpaneel, das in der Lage ist, Wärme gleichmäßig abzugeben, um eine Verbesserung der Kühl- oder Heizleistung zu erreichen.

Insbesondere bei Fußbodenheizungen tritt dabei das Problem auf, dass neben den zum Heizen verwendeten Rohrleitungen, den Heizrohren, weitere in dem Fußbodenaufbau integrierte Rohrleitungen zum Erwärmen beziehungsweise Abkühlen eines Raumes beitragen. Typischerweise handelt es sich bei derartigen Rohrleitungen um sogenannte durchlaufende Anbindeleitungen (auch Anbinderohrleitungen) für benachbarte Räume. Durch die durchlaufenden Anbindeleitungen wird eine Regelung der Raumtemperatur in dem jeweiligen Raum erschwert bzw. ist unter Umständen gar nicht möglich, wenn ein solcher Raum besonders klein ist. Dies liegt unter anderem daran, dass diese Rohre mit geringen Verlegeabständen vor Verteilern verlegt werden (müssen). Zudem werden möglicherweise Nebenräume, wie beispielsweise Flure oder Abstellkammern, über eine gewünschte Solltemperatur hinaus aufgeheizt, was zu einer Reduzierung der Energieeffizienz des Gesamtsystems führt.

Aufgabe der vorliegenden Erfindung ist es, ein Konzept für ein Rohrleitungspanel zu offenbaren, welches einen Beitrag zur Vermeidung oder Reduzierung der obigen Nachteile leistet.

Es wird ein Rohrleitungspanel zum Führen einer Anbinderohrleitung eines Fußbodenheizungssystems offenbart. Das Rohrleitungspanel weist eine Verlegeplatte auf, in die zumindest ein zu einer Oberseite der Verlegeplatte offener erster Rohrführungskanal zur Aufnahme einer Anbinderohrleitung eingebracht ist. Der erste Rohrführungskanal weist zumindest einen Verlaufsabschnitt mit einem Abschnittsbeginn und einem Abschnittsende auf. Der erste Rohrführungskanal ist von dem Abschnittsbeginn bis zu dem Abschnittsende so ausgebildet, dass eine in dem Rohrführungskanal verlegte Anbinderohrleitung von einer ersten Verlegeebene am Abschnittsbeginn in eine zweite Verlegeebene am Abschnittsende bezüglich der Oberseite überführt wird.

Das Rohrleitungspanel ermöglicht eine Höhenänderung für Anbinderohrleitungen bei Fußbodenheizungssystemen. Dadurch ergeben sich eine Reihe von Vorteilen. Grundsätzlich ermöglicht das Rohrleitungspanel Höhenversätze beim Verlegen von Rohren, insb. der Anbindungsrohrleitungen, zu kompensieren, wie sie in Hausbauten vorkommen können. So können beispielsweise baubedingte Stufen oder Absätze überwunden werden, wobei das Rohrleitungspanel die Leitungen auf ein höheres Niveau anhebt. Dies ermöglicht nahtlose Übergänge bei unterschiedlichen Verlegeniveaus der Leitungen.

Des Weiteren trägt das Rohrleitungspanel besonders dazu bei, die eingangs genannten Nachteile zu überwinden oder zumindest zu reduzieren. Eine Lösung zum Vermeiden der Überhitzung von Räumen, in denen die Anbinderohrleitungen von einem Verteiler bzw. zu dem Verteiler verlaufen, besteht darin, diese Leitungen nicht auf einer auf einem Rohboden (beispielsweise Beton) verlegten Dämmung auszulegen, sondern die Anbinderohrleitungen direkt in der Dämmebene zu verlegen. Dadurch kann eine Überhitzung in dem jeweiligen Raum sowie etwaigen, angrenzenden Nebenräume, vermieden werden. So kann beispielsweise eine Oberflächentemperatur von 28,5 °C auf 21,5 °C verringert werden. Dadurch können beispielsweise Temperaturüberschreitungen für Parkettböden und/oder gemäß DIN EN 1264 vermieden werden. Eine Wärmeabgabe in den Rohboden, etwa Beton, ist konstakt und erfüllt die Anforderungen nach EnEV 2014 und DIN EN 1264. Durch das Verlegen in der Dämmebene ist es auch möglich, auf der Dämmung einen separaten Heizkreis zu installieren, so dass die Regelung der Raumtemperatur in dem jeweiligen Raum mit Anbinderohrleitungen ermöglicht oder zumindest deutlich verbessert ist (EnEV 2014).

Das offenbarte Rohrleitungspanel bietet nun die Möglichkeit, die in der Dämmung verlegten Anbinderohrleitungen auf ein höheres Niveau zu heben, um die Anbinderohrleitungen in Räume zu führen, in denen ein Heiz- bzw. Kühlkreislauf einer Fußbodenheizung vorgesehen ist. Mit anderen Worten ist eine Installation der Anbinderohrleitungen unter einer Heizebene bzw. Estrichebene für Fußbodenheizungssysteme vorgesehen, wobei ein Rohrleitungspanel einen Höhenunterschied zur Estrichebene, der beispielsweise bis zu 20 mm betragen kann, ausgleicht. Insbesondere eignet sich das Rohrleitungspanel im Bereich von Türen, etwa im Türstock, so dass das Rohrleitungspanel auch als Türführungspanel bezeichnet werden kann.

Hier und im folgenden wird unter einer Anbinderohrleitung eine solche verstanden, die eine Verbindung von einem Verteiler zu einem Raum herstellt, in welchem eine Fußbodenheizung mit Heizrohren vorgesehen ist. Eine Anbinderohrleitung und ein Heizrohr können ein und das selbe Rohr sein, so dass auf den Einsatz von in den Fußbodenaufbau integrierten Adaptern oder Kupplungen verzichtet werden kann. Eine Anbinderohrleitung und ein Heizrohr werden mit einem tempierbaren Medium wie Wasser durchflossen.

Mittels des Rohrleitungspanels, welches auch als Rohrleitungsplatte oder Rohrträgerplatte bezeichnet werden kann, kann ein zu verlegendes Rohr aus einer ersten Verlegeebene mittels dem Rohrleitungspanel in eine höhere zweite Verlegeebene überführt werden. Mit wieder anderen Worten wird ein Höhenversatz für eine Anbinderohrleitung bewirkt. Wieder anders ausgedrückt kann ein Höhenunterschied zwischen zwei Ebenen, in welchen die Anbinderohrleitung verlegt werden soll, auf einfache Art und Weise kompensiert werden. Der erste Rohrführungskanal verläuft somit nicht über seinen gesamten Verlauf hinweg parallel zur Oberseite. Die Höhenänderung erfolgt zumindest ein einem Verlaufsabschnitt des Rohrführungskanals, kann aber über den gesamten Verlauf des Rohrführungskanal stattfinden.

Für die beschriebene Funktionalität weist der erste Rohrführungskanal eine Ausgestaltung auf, die eine Höhenänderung bezüglich der Oberseite bewirkt. Mit anderen Worten ist der Kanal in dem Verlaufsabschnitt so ausgebildet, dass das Rohr unter einem bestimmten Winkel bezüglich der Oberseite verläuft. Hierzu sind verschiedene Möglichkeiten denkbar. Beispielsweise kann der Rohrführungskanal eine stetige Höhenveränderung, eine abschnittsweise und/oder stufenartige Höhenveränderung aufweisen. Beispielsweise hat der erste Rohrführungskanal von dem Abschnittsbeginn bis zu dem Abschnittsende eine Steigung oder Neigung bezogen auf die Oberseite von wenigen Prozent haben. Die Steigung bzw. Neigung kann konstant verlaufen, wodurch ein sanfter Höhenversatz realisiert wird. Beispielsweise verändert sich eine Kanaltiefe bezogen auf die Oberseite über den Verlauf des ersten Rohrführungskanals in dem Verlaufsabschnitt. Die Kanaltiefe bezieht sich dabei auf einen im Querschnitt des Rohrführungskanals tiefsten Punkt.

Die Verlegeplatte ist eingerichtet, direkt auf einen Rohuntergrund verlegt zu werden. Die erste Verlegeebene ist bezogen auf die Oberseite unterschiedlich zu der zweiten Verlegeebene. Die erste Verlegeebene kann auch als Dämmebene bezeichnet werden, und die zweite Verlegeebene kann auch als Fußbodenheizungsebene bezeichnet werden. Die Verlegeplatte ist beispielsweise rechteckig ausgebildet und hat vier senkrecht zueinander stehende Stirnkanten, die die Oberseite einrahmen.

Bei dem ersten und weiteren zu beschreibenen Rohrführungskanälen handelt es sich um im Wesentlichen halbzylinderförmige oder u-förmige Ausnehmungen in der Verlegeplatte. Die Rohre bzw. Rohrleitungen werden in den Rohrführungskanälen werkzeuglos festgelegt. Beispielsweise verrasten die Rohre oder sind in die Rohrführungskanäle einklemmbar. Alternativ oder zusätzlich werden Rohrleitungen über Halteelemente, Tacker oder dergleichen an der Platte befestigt.

Gemäß einer Ausführungsform verläuft die erste Verlegeebene parallel versetzt zu der Oberseite und die zweite Verlegeebene fällt mit der Oberseite der Verlegeplatte zusammen. Dadurch liegt ein in dem Rohrleitungspanel aufgenommenes Rohr nach dem Abschnittsende in der Ebene der Oberseite des Rohrleitungspanels oder auf der Oberseite auf. Dies bietet Vorteile beim weiteren Verlegen oder Führen des entsprechenden Rohres. Auch bietet sich der Vorteil, dass an das Rohrleitungspanel problemlos an ein weiteres Rohrleitungspanel oder andere Trägerplatten für Rohre angeordnet werden kann, ohne dass sich Probleme beim Übergang zwischen dem Rohrleitungspanel und der weiteren Trägerplatte bzw. weiteren Panel ergeben, etwa aufgrund von fertigungsbedingten Toleranzen. Insb. kann auf eine exakte Aneinanderreihung zweier solcher Platten verzichtet werden.

Der erste Rohrführungskanal verläuft beispielsweise von einer ersten Stirnkante in Richtung einer zweiten Stirnkante oder bis zu der zweiten Stirnkante. Beispielsweise liegt die erste Stirnkante der zweiten Stirnkante gegenüber. Beispielsweise verläuft der erste Rohrführungskanal geradlinig. Dies ermöglicht eine sanfte Höhenänderung für ein verlegtes Rohr. Beispielsweise weistdie erste Stirnkante den Abschnittsbeginn auf. Dadurch wird ein aufgenommenes Rohr direkt von der ersten Stirnkante ausgehend in seiner Höhenlage verändert. Dies trägt zu einem einfachen und kompakten System bei, wobei ein Rohrführungskanal beispielsweise nur einen kurzen Verlauf mit Höhenänderungen haben muss, um die für die zweite Verlegeebene nötige Höhe zu erreichen.

Es sei an dieser Stelle darauf hingewiesen, dass auch zwei oder mehr solcher erster Rohrführungskanäle entsprechend der beschriebenen und noch zu beschreibenden Ausführungsformen vorgesehen sein können. Diese Kanäle können beispielsweise parallel versetzt zueinander verlaufen.

Gemäß einer Ausführungsform weist der erste Rohrführungskanal ein Dichtelement auf, welches so ausgebildet ist, dass das Dichtelement in einem Zustand, in welchem in dem ersten Rohrführungskanal eine Anbinderohrleitung aufgenommen ist, zwischen der aufgenommen Anbinderohrleitung und dem ersten Rohrführungskanal angeordnet ist und zusammen mit dem aufgenommenen Rohr den ersten Rohrführungskanal in einer Verlaufsrichtung gegenüber einem Fluid abdichtet. Bei dem fluidisch handelt es sich beispielsweise um Wasser oder Estrich(Wasser), welches durch das Dichtelement daran gehindert wird, sich über den ersten Rohrführungskanal zu verteilen. Beispielsweise wird dadurch verhindert, dass Flüssigkeit in angrenzende Trägerplatten, beschrieben, eindringen kann.

Bei dem Dichtelement handelt es sich beispielsweise um eine Dichtlippe, die in den ersten Rohrführungskanal eingebracht ist. Das Dichtelement ist beispielsweise u-förmig ausgebildet und kleidet den Rohrführungskanal über seinen Innenumfang aus. Die Formgebung des Dichtelements ist beispielsweise an einer Innenseite an eine Außenkontur einer aufzunehmenden Anbinderohrleitung und an der Außenseite an eine Innenkontur des Kanals angepasst.

Gemäß einer Ausführungsform sind im Bereich des Dichtelements ein oder mehrere Halteschlitze oder -öffnungen eingebracht, in welche ein Halteelement eingebracht werden kann und eine in dem ersten Rohrführungskanal aufgenommene Anbinderohrleitung gegen das Dichtelement verklemmend halten kann. Bei dem Halteelement handelt sich beispielsweise um einen Halteclip oder dergleichen. Dadurch wird die Dichtwirkung sichergestellt oder verbessert.

Gemäß einer Ausführungsform ist die Verlegeplatte aus einem Dämmmaterial hergestellt. Optional ist die Verlegeplatte aus zumindest zwei übereinander angeordneten Schichten ausgebildet, wobei die Schichten ein jeweils unterschiedliches Dämmmaterial aufweisen. Bei dem oder den Dämmaterialien handelt es sich beispielsweise um Schaumkunststoff, insbesondere Polystyrol, expandiertes Polystyrol (etwa EPS DEO oder EPS DES) oder Polyethylenschaum. Die Verlegeplatte kann auch als Mineralfaserplatte oder als Holfaserplatte ausgestaltet sein.

Optional ist die Verlegeplatte auf einer der Oberseite gegenüberliegenden Unterseite selbstklebend ausgebildet. Beispielsweise ist eine selbstklebende Schicht vollflächig oder partiell aufgebracht. Es bietet sich auch das Vorsehen von einem oder mehreren Klebenstreifen oder Klebebändern an. Dadurch kann die Platte einfach auf einem Untergrund verlegt und gleichzeitig fixiert werden.

Optional ist die Verlegeplatte fluiddicht ausgebildet. Hierzu weist die Platte ein entsprechendes Material oder zumindest eine fluidabweisende, etwa wasserabweisende Schicht auf.

Gemäß einer Ausführungsform ist in die Verlegeplatte zumindest ein zu der Oberseite offener zweiter Rohrführungskanal zur Aufnahme eines Rohres eingebracht, der im Wesentlichen parallel zu der Oberseite verläuft. Der zweite Rohrführungskanal verläuft im Gegensatz zu dem ersten Rohrführungskanal in einer Ebene ohne Höhenänderungen. Dadurch bildet dieser eine einzige Verlegeebene für ein Rohr aus. Mit anderen Worten hat der zweite Rohrführungskanal einen über den Verlauf hinweg konstant bleibenden Querschnitt, der sich nicht in der Höhe bezüglich der Oberseite ändert.

Gemäß einer Ausführungsform verläuft der zweite Rohrführungskanal von einer dritten Stirnkante zu der ersten Stirnkante, der zweiten Stirnkante und/oder einer vierten Stirnkante verläuft.

Der zweite Rohrführungskanal kann somit mehrere Abschnitte und/oder Abzweigungen aufweisen. Beispielsweise hat der zweite Rohrführungskanal zumindest einen bogenförmigen Abschnitt. Dadurch können Umlenkungen einer Anbinderohrleitunge um 90° erreicht werden. Beispielsweise weist der zweite Rohrführungskanal einen geradlinig verlaufenden Abschnitt von der dritten zu der vierten Stirnkante auf, wobei von dem geradling verlaufenden ein oder zwei weitere Abschnitte zu der ersten und/oder zweiten Stirnkante abzweigen.

Analog zu oben gilt, dass auch mehrere solcher zweiter Rohrführungskanäle vorgesehen sein können.

Durch das Vorsehen eines oder mehrerer zweiter Kanäle ist ein multifunktionales Panel ermöglicht, dass sich für verschiedene Einsätz eignet. Insbesondere können mehrere solcher Rohrleitungspanele hintereinander oder aneinander gereiht werden. Je nach Ausrichtung der Rohrleitungspanele in Abhängigkeit der ersten und zweiten Rohrführungskanäle können Anbinderohrleitungen über mehrere Panele in einer Verlegeebene, etwa der Dämmebene, verlegt werden und je nach Bedarf in eine höhere Verlegeebene gehoben werden. Dafür bedarf es nur einer einzigen Art von Rohrleitungspanel, wodurch Herstellungskosten reduziert oder gering gehalten werden können. Dabei ist darauf zu achten, dass beispielsweise ein Verlegeabstand zweier oder mehrerer erster Kanäle dem zweier oder mehrerer zweiter Kanäle zumindest im Bereich der angrenzenden Stirnkanten entspricht, so dass nahtlose Übergänge ermöglicht sind.

Der oder die sämtlichen Rohrführungskanäle sind zur Aufnahme von Mehrschichtverbundrohren oder Kunststoffrohren mit einem Durchmesser von 14 mm oder 16 mm ausgebildet.

Des Weiteren wird ein Fußbodenaufbau für eine Fußbodenheizung offenbart. Der Fußbodenaufbau weist ein erstes Rohrleitungspanel und ein zweites Rohrleitungspanel jeweils einem ersten und zweiten Rohrführungskanal nach einer der vorbeschriebenen Ausführungsformen auf. Das erste Rohrleitungspanel und das zweite Rohrleitungspanel sind derart aneinander angeordnet, dass der zweite Rohrführungskanal des ersten Rohrleitungspanel nahtlos in den ersten Rohrführungskanal des zweiten Rohrleitungspanels übergeht. Eine Anbinderohrleitung kann so in dem zweiten Rohrführungskanal des ersten Rohrleitungspanels und dem ersten Rohrführungskanal des zweiten Rohrleitungspanels aufgenommen werden, dass die Anbinderohrleitung in dem ersten Rohrleitungspanel in einer ersten Verlegeebene verläuft und mittels des zweiten Rohrleitungspanels von der ersten Verlegeebene in eine zweite Verlegeebene überführt wird.

Der Fußbodenaufbau kann auch als Rohrleitungssystem bezeichnet werden ermöglicht im Wesentlichen die vorgenannten Vorteile und Funktionen.

Der Fußbodenaufbau kann eine Abdeckschicht aufweisen, die die der Oberseite der beiden Rohrleitungspanele aufgebracht ist, etwa eine Estrichschicht. Es können jedoch alternativ ein oder meherere Trägerplatten auf die beiden Rohrleitungspanele aufgebracht sein, auf die oder in die Heizungsrohre eines Heizkreislaufs einer Fußbodenheizung angeordnet sind. Beispielsweise sind die Trägerplatten mit einer Klettlage oder Klettschicht versehen, an welche mit Klettband umwickelte Rohre fixiert werden können, so dass ein regelbarer Heizkreislauf gebildet ist.

Weitere Ausführungsformen, Vorteile und Funktionen sind in den Unteransprüchen und der nachfolgenden Beschreibung von Ausführungsbeispielen offenbart.

Die Ausführungsbeispiele werden unter Bezugnahme auf die angehängten Figuren im Detail beschrieben. Dabei werden gleiche oder gleichartige Komponenten unterschiedlicher Ausführungsbespiele mit denselben Bezugszeichen versehen. Mehrere Instanzen derselben Komponente sind zur besseren Unterscheidung mit alphabetischen Suffixen versehen. Sofern kein Suffix angegeben ist, wird auf alle Instanzen Bezug genommen.

In den Figuren zeigen:
Figur 1 eine schematische, perspektivische Ansicht eines Rohrleitungspanels gemäß einem Ausführungsbeispiel,
Figur 2 eine schematische, perspektivische Ansicht eines Fußbodenaufbaus 30 gemäß einem Ausführungsbeispiel und
Figur 3 einen schematischer Verlegeplan für eine Fußbodenheizung mit einem Fußbodenaufbau gemäß dem Ausführungsbeispiel der Figur 2.

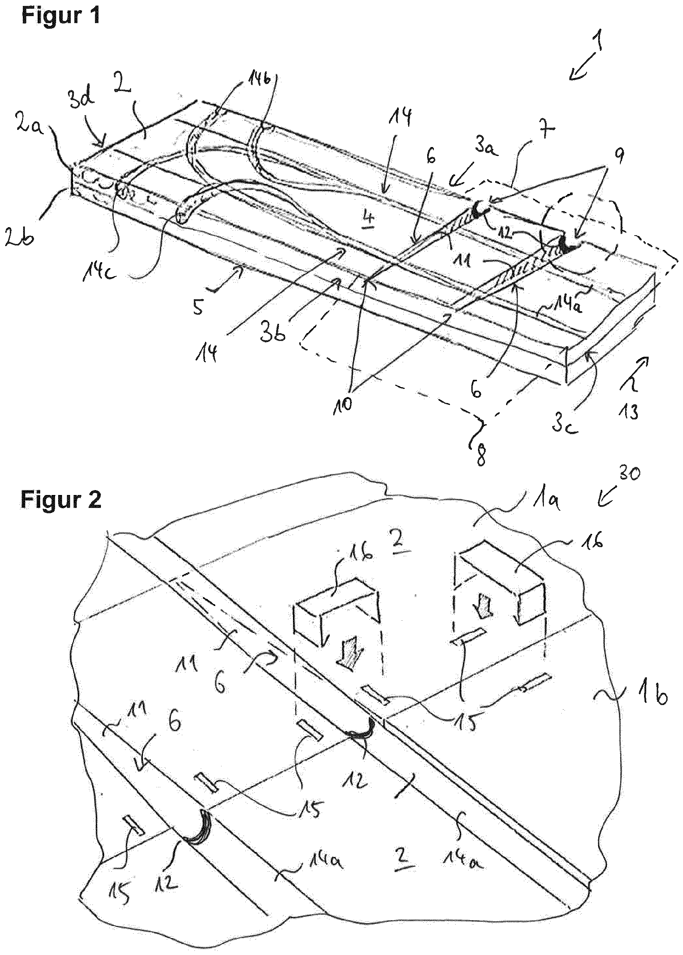

Figur 1 zeigt eine schematische, perspektivische Ansicht eines Rohrleitungspanels 1 zum Führen von Anbinderohrleitungen eines Fußbodenheizungssystems gemäß einem Ausführungsbeispiel der Erfindung.

Das Rohrleitungspanel 1 hat eine Verlegeplatte 2, die aus zwei Schichten 2a und 2b gefertigt ist, wobei die obere Schicht 2a und die untere Schicht 2b aus unterschiedlichem Dämmmaterial, nämlich expandiertem Polystyrolmaterial, hergestellt sind. Im Beispiel besteht die obere Schicht 2a aus EPS DEO und die untere Schicht 2b aus EPS DES.

Die Verlegeplatte 2 ist rechteckig in Form einer Platte ausgebildet und hat eine erste Stirnkante 3a, eine zweite Stirnkante 3b, die der ersten Stirnkante 3a gegenüberliegt, eine dritte Stirnkante 3c und eine vierte Stirnkante 3d, welche der dritten Stirnkante 3c gegenüberliegt. Die Verlegeplatte 2 hat weiter eine Oberseite 4 und eine dieser gegenüberliegenden Unterseite 5.

Das Rohrleitungspanel 1 ist ausgebildet, um auf einem Untergrund, etwa Boden wie einem Rohbeton, verlegt zu werden und um Anbinderohrleitungen eines Fußbodenheizungssystems zu führen. Optional ist die Verlegeplatte 2 an der Unterseite 5 selbstklebend ausgebildet, so dass die Verlegeplatte 2 einfach und schnell am Untergrund fixiert werden kann.

In die Verlegeplatte 2 sind zwei parallele erste Rohrführungskanäle 6 eingebracht, die zur Oberseite 4 offen sind und als etwa halbzylinderförmige Ausnehmungen ausgestaltet sind. Die ersten Rohrführungskanäle 6 erstrecken sich von der ersten Stirnkante 3a zur zweiten Stirnkante 3b.

In die ersten Rohrführungskanäle 6 können können Anbinderohrleitungen, etwa Kunststoffrohre aus vernetztem Polyethylen (PEX), mit 14 oder 16 mm Durchmesser werkzeuglos eingebracht oder eingedrückt werden. Die Rohre sind beispielsweise klemmend in den ersten Kanälen 6 gehalten.

Die beiden ersten Rohrführungskanäle 6 sind über den gesamten Verlauf von der ersten Stirnkante 3a bis zur zweiten Stirnkante 3b so ausgebildet, dass ein darin augenommenes Rohr von einer ersten Verlegeebene 7, die auch als Dämmebene bezeichnet werden kann, in eine zweite Verlegeebene 8, die als Estrichebene bezeichnet werden kann, überführt werden. Die erste Verlegeebene 7 fällt im Beispiel mit der Trennebene der Schichten 2a und 2b zusammen, was aber nicht zwingend der Fall sein muss. Die zweite Verlegeebene 8 fällt mit der Oberseite 4 der Verlegeplatte 2 zusammen.

Die ersten Rohrführungskanäle 6 haben somit über den gesamten Verlauf ausgehend von einen Abschnittsbeginn 9 bis zu einem Abschnittsende 10 eine Steigung 11, die konstant und stetig ist. Selbstverständlich kann die Steigung 11 auch nur in einem Verlaufsabschnitt der ersten Rohrführungskanäle 6 ausgebildet sein.

In die ersten Rohrführungskanäle 6 ist zusätzlich jeweils ein Dichtelement 12 in Form einer u-förmigen Dichtlippe eingebracht. Diese Dichtelemente 12 sind nicht hinderlich für die Aufnahme von Anbinderohrleitungen. Im Beispiel sind die Dichtelemente 12 im Bereich des jeweiligen Abschnittsbeginn 9 angeordnet. Die Dichtelemente 12 sind bei aufgenommener Anbinderohrleitung zwischen dem ersten Rohrführungskanal 6 und der Anbinderohrleitung angeordnet und dichten die ersten Rohrführungskanäle 6 in einer Verlaufsrichtung 13 gegenüber einem Fluid, insbesondere Estrich und/oder Estrichwasser ab. Diese Abdichtung ist beispielsweise hilfreich, da die ersten Rohrführungskanäle 6 geneigt sind und so ein etwaiges Fluid in an das Rohrführungspanel 1 angrenzende, weitere Panele oder Trägerplatten für Rohre eindringen kann. Die Verlegeplatte 2 selbst ist fluidundurchlässig, insbesonders wasserdicht aufgrund des Materials. Zusätzlich oder alternativ weist die Verlegeplatte 2 ein oder mehrere wasserabweisende Schichten auf.

In die Verlegeplatte 2 sind weiterhin zwei zweite Rohrführungskanäle 14 eingebracht, die von der dritten Stirnkante 3c jeweils sowohl zur ersten als auch zur zweiten und vierten Stirnkante 3a, 3b, 3d verlaufen. Die zweiten Rohrführungskanäle 14 haben jeweils einen ersten, geradlinig verlaufenden Abschnitt 14a, der von der dritten Stirkante 3c bis zur vierten Stirnkante 3d verläuft. Von diesen ersten Abschnitten 14a zweigen jeweils zweite Abschnitte 14b bogenförmig oder geschwungen zur ersten Stirnkante 3a und jeweils dritte Abschnitte 14c bogenförmig oder geschwungen zur zweiten Stirnkante 3b ab. Die zweiten Rohrführungskanäle 14 sind analog zu den ersten Kanälen 6 zur Aufnahme von Anbinderohrleitungen ausgebildet, mit dem Unterschied, dass diese keine Höhenänderung, etwa eine Steigung haben. Sie verlaufen somit parallel zur Oberseite 3. Die zweiten Kanäle 14 sind so ausgestaltet, dass aufgenommene Rohre in der ersten Verlegeebene 7 liegen. Weiterhin entspricht ein Verlegeabstand der zweiten Kanäle 14 zumindest in den ersten Abschnitten 14a in der ersten Verlegeebene 7 dem Verlegeabstand der ersten Kanäle 6.

Bei dem Rohrleitungspanel 1 handelt es sich eine modulares, multifunktionales Panel, welches sich für die eingangs genannten Funktionen eignet.

Das gezeigte Rohrleitungspanel 1 kann auch mehr als die gezeigten ersten und zweiten Rohrführungskanäle 6 und 14 aufweisen. Je nach Bedarf kann das Rohrleitungspanel 1 mit Sollbruchstellen oder Solltrennstellen versehen sein, so dass beispielsweise nur die ersten Rohrführungskanäle 6 und die geradlinigen ersten Abschnitte 14a vorhanden sind.

Auch können mehrere des gezeigten Rohrleitungspanels 1 nebeneinander einstückig als ein gesamtes Rohrleitungspanel mit einer einzigen Verlegeplatte ausgebildet sein. Wiederrum können Sollbruch- oder trennstellen vorgesehen sein, um dann einzelne des gezeigten Rohrleitungspanels 1 zu erhalten.

In Figur 2 sind zwei des beschriebenen Rohrleitungspanels 1 in einem exemplarischen Fußbodenaufbau 30 dargestellt (erstes Panel 1a und zweites Panel 1b). Dabei sind diese so aneinander angeordnet, dass die zweiten Rohrführungskanäle 14 des zweiten Panels 1b mit den geradlinigen Abschnitten 14a nahtlos in die ersten Rohrführungskanäle 6 des ersten Panels 1a übergehen. Die Panele 1a und 1b sind daher um 90° verdreht zueinander ausgerichtet. Dadurch können Anbinderohrleitungen in der ersten Verlegeebene 7 verlegt werden und wahlweise auf das höhere Niveau der zweiten Verlegeebene 8 angehoben werden.

Zusätzlich zu des anhand von Figur 1 beschriebenen Rohrleitungspanels 1 hat haben die Panele 1a, 1b gemäß Figur 2 Halteschlitze 15 zur Aufnahme von Halteelementen 16, die im Beispiel als Halteklammern oder -clips ausgebildet sind.

Mittels des Halteelemente 16 können einzelne Rohrleitungspanele 1a und 1b verbunden werden. Es können auch Anbinderohrleitungen in den Rohrführungskanälen 6 und 14 fixiert werden. Dabei sind Haltschlitze 15 derart im Bereich der Dichtelemente 12 angeordnet, dass durch das Fixieren mittels Halteelementen ein aufgenommens Anbinderohr im entsprechenden Rohrführungskanal gegen das Dichtelement 12 verklemmt wird. Dies sichert die Dichtwirkung oder verbessert diese.

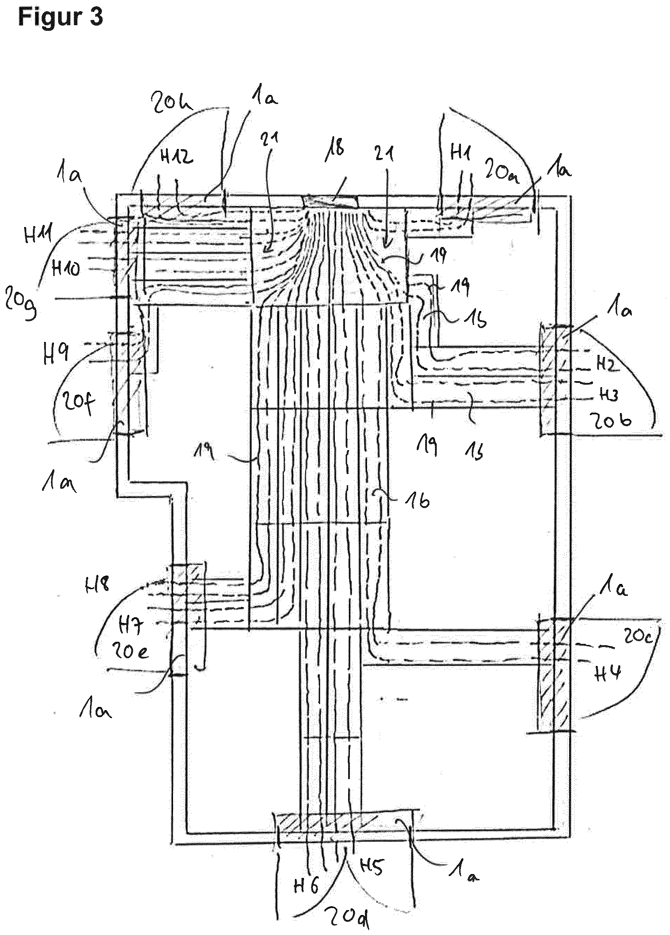

Figur 3 zeigt schematisch einen Grundriss 17 mit einem Verlegeplan für einen Fußbodenaufbau einer Fußbodenheizung. Dabei sind mehrere Panele 1a und 1b ähnlich des Aufbaus gemäß Figur 2 zusammengesetzt.

Der Grundriss 17 zeigt einen Raum, in welchem über einen Verteiler 18 mehrere Anbinderohrleitungen 19 (strichliert dargestellt, einzelne exemplarisch mit Bezugszeichen) paarweise im Boden zu verschiedenen Räumen 20a bis 20h geleitet werden, um in diesen Räumen Heizkreisläufe H1 bis H12 für Fußbodenheizungen zu bilden. Vom Verteiler 18, an welchem sämtliche Anbinderohrleitungen 19 nah nebeneinander aus der Wand oder einem Rohboden geführt werden, werden alle Anbinderohrleitungen 19 über Verteilerplatten 21 in Richtung der Räume 20 geführt. Die Verteilerplatten 21 vergrößern einen Verlegeabstand der einzelnen Anbindungsrohrleitungen 19. Bei den Verteilerplatten 21 handelt es sich um Dämmplatten, in denen die Rohre 19 verlegt sind. Nicht jedoch sind die Rohre 19 auf den Platten 19 verlegt. Mit anderen Worten sind die Rohre 19 in einer Dämmebene verlegt, die der ersten Verlegeebene 7 wie oben beschrieben entspricht.

An die Verteilerplatten 21 schließen mehrere Rohrleitungspanele 1b (einzelne exemplarisch mit Bezugszeichen) wie oben beschrieben an, wobei die Anbindungsrohre 19 mittels der zweiten Rohrführungskanäle 14 (siehe oben) zu den Räumen 20 geführt sind.

Dadurch, dass die Rohrleitungen 19 in den Verteilerplatten 21 und den Rohrleitungspanelen 1b in der ersten Verlegeebene 7 verlaufen, kann über die Verteilerplatten 21 und die Rohrleitungspanele 1b eine Abdeckung in der zweiten Verlegeebene, der Estrichebene, aufgebracht werden, die wiederum die Installation eines separaten, regelbaren Heizkreises, etwa gemäß EnEV 2014, erlaubt. Beispielsweise können Rohrträgerplatten zum Befestigen von Heizrohren für Estrichkonstruktionen, die mit einer Klettschicht oder einem Klettvließ versehen oder kaschiert sind, auf die Verteilerplatten 21 und die Panele 1b gebracht werden. Die durch die Verteilerplatten 21 und Panele 1b gebildete Dämmschicht wird gemäß DIN18560 nicht beschädigt. Durch die Abdeckung wird ein Eindringen von Estrich bzw. Estrichwasser verhindert.

Anstelle der Panele 1b können auch andere Dämmplatten zum Verteilen der Anbinderohrleitungen verwendet werden. Notwending sind jedoch die Panele 1a, um den Höhenversatz auszugleichen.

In den Übergangsbereichen zu den Räumen 20 sind Rohrleitungspanele 1 in ihrer anderen Funktion verwendet (Bezugszeichen 1a), wobei die Anbinderohrleitungen 19 über die ersten Rohrführungskanäle 6 in die zweite Verlegeebene, etwa der Estrichebene, geführt sind.

### Bezugszeichenliste

- 1: Rohrleitungspanel
- 2: Verlegeplatte
- 3: Stirnkante
- 4: Oberseite
- 5: Unterseite
- 6: erster Rohrführungskanal
- 7: erste Verlegeebene
- 8: zweite Verlegeebene
- 9: Abschnittsbeginn
- 10: Abschnittsende
- 11: Steigung
- 12: Dichtelement
- 13: Verlaufsrichtung
- 14: zweiter Rohrführungskanal
- 14a-c: Abschnitt
- 15: Halteschlitze
- 16: Halteelement
- 17: Grundriss
- 18: Verteiler
- 19: Anbinderohrleitung
- 20a-h: Raum
- 21: Verteilerplatte
- 30: Fußbodenaufbau
- H1-12: Heizkreislauf

## Patentansprüche

1. Rohrleitungspanel (1) zum Führen zumindest einer Anbinderohrleitung eines Fußbodenheizungssystems, aufweisend
eine Verlegeplatte (2), in die zumindest ein zu einer Oberseite (4) der Verlegeplatte (2) offener erster Rohrführungskanal (6) zur Aufnahme einer Anbinderohrleitung eingebracht ist, wobei der erste Rohrführungskanal (6) zumindest einen Verlaufsabschnitt mit einem Abschnittsbeginn (9) und einem Abschnittsende (10) aufweist, **dadurch gekennzeichnet, dass** der erste Rohrführungskanal (6) von dem Abschnittsbeginn (9) bis zu dem Abschnittsende (10) so ausgebildet ist, dass eine in dem ersten Rohrführungskanal (6) verlegte Anbinderohrleitung von einer ersten Verlegeebene (7) am Abschnittsbeginn (9) in eine zweite Verlegeebene (8) am Abschnittsende (10) bezüglich der Oberseite (4) überführt wird.

2. Rohrleitungspanel (1) nach Anspruch 1, wobei die erste Verlegeebene (7) parallel versetzt zu der Oberseite (4) verläuft und die zweite Verlegeebene (8) mit der Oberseite (4) der Verlegeplatte (2) zusammenfällt.

3. Rohrleitungspanel (1) nach Anspruch 1 oder 2, wobei der erste Rohrführungskanal (6) von einer ersten Stirnkante (3a) der Verlegeplatte (2) in Richtung einer zweiten Stirnkante (3b) oder bis zu der zweiten Stirnkante (3b) der Verlegeplatte (2) verläuft.

4. Rohrleitungspanel (1) nach Anspruch 3, wobei die erste Stirnkante (3a) der Verlegeplatte (2) den Abschnittsbeginn (9) aufweist.

5. Rohrleitungspanel (1) nach einem der vorhergehenden Ansprüche, wobei der erste Rohrführungskanal (6) ein Dichtelement (12) aufweist, welches so ausgebildet ist, dass das Dichtelement (12) in einem Zustand, in welchem in dem ersten Rohrführungskanal (6) eine Anbinderohrleitung aufgenommen ist, zwischen der aufgenommenen Anbinderohrleitung und dem ersten Rohrführungskanal (6) angeordnet ist und zusammen mit der aufgenommenen Anbinderohrleitung den ersten Rohrführungskanal (6) in einer Verlaufsrichtung gegenüber einem Fluid abdichtet.

6. Rohrleitungspanel (1) nach Anspruch 5, wobei im Bereich des Dichtelements (12) ein oder mehrere Halteschlitze (15) oder -öffnungen eingebracht sind, in welche ein Halteelement (16) eingebracht werden kann und eine in dem ersten Rohrführungskanal (6) aufgenommene Anbinderohrleitung gegen das Dichtelement (12) verklemmend halten kann.

7. Rohrleitungspanel (1) nach einem der vorhergehenden Ansprüche, wobei die Verlegeplatte (2) aus einem Dämmmaterial hergestellt ist.

8. Rohrleitungspanel (1) nach Anspruch 7, wobei die Verlegeplatte (2) aus zumindest zwei übereinander angeordneten Schichten (2a, 2b) ausgebildet ist, wobei die Schichten (2a, 2b) ein jeweils unterschiedliches Dämmmaterial aufweisen.

9. Rohrleitungspanel (1) nach einem der vorhergehenden Ansprüche, wobei die Verlegeplatte (2) auf einer der Oberseite (4) gegenüberliegenden Unterseite (5) selbstklebend ausgebildet ist.

10. Rohrleitungspanel (1) nach einem der vorhergehenden Ansprüche, wobei die Verlegeplatte (2) fluiddicht ausgebildet ist.

11. Rohrleitungspanel (1) nach einem der vorhergehenden Ansprüche, wobei in die Verlegeplatte (2) zumindest ein zu der Oberseite (4) offener zweiter Rohrführungskanal (14) zur Aufnahme einer Anbinderohrleitung eingebracht ist, der im Wesentlichen parallel zu der Oberseite (4) verläuft.

12. Rohrleitungspanel (1) nach Anspruch 11, wobei der zweite Rohrführungskanal (14) von einer dritten Stirnkante (3c) der Verlegeplatte (2) zu der ersten Stirnkante (3a), der zweiten Stirnkante (3b) und/oder einer vierten Stirnkante (3d) der Verlegeplatte (2) verläuft.

13. Rohrleitungspanel (1) nach einem der vorhergehenden Ansprüche, wobei der oder die Rohrführungskanäle (6, 14) zur Aufnahme von Mehrschichtverbundrohren oder Kunststoffrohren mit einem Durchmesser von 14 mm oder 16 mm ausgebildet sind.

14. Fußbodenaufbau (30) für eine Fußbodenheizung, aufweisend ein erstes Rohrleitungspanel (1a) und ein zweites Rohrleitungspanel (1b) jeweils nach einem der Ansprüche 11 bis 13 sowie zumindest eine Anbinderohrleitung für ein fluides Temperiermedium, wobei
das erste Rohrleitungspanel und das zweite Rohrleitungspanel derart aneinander angeordnet sind, dass
- der zweite Rohrführungskanal (14) des ersten Rohrleitungspanel (1a) nahtlos in den ersten Rohrführungskanal (6) des zweiten Rohrleitungspanels (1b) übergeht, und
- die Anbinderohrleitung so in dem zweiten Rohrführungskanal (14) des ersten Rohrleitungspanels (1a) und dem ersten Rohrführungskanal (6) des zweiten Rohrleitungspanels (1b) aufgenommen ist, dass die Anbinderohrleitung in dem ersten Rohrleitungspanel (1a) in einer ersten Verlegeebene (7) verläuft und mittels des zweiten Rohrleitungspanels (1b) von der ersten Verlegeebene (7) in eine zweite Verlegeebene (8) überführt wird.

15. Fußbodenaufbau (30) nach Anspruch 14, wobei die Anbinderohrleitung über zumindest ein Halteelement (16) an dem zweiten Rohrleitungspanel (1b) befestigt ist, welches derart im Bereich eines im ersten Rohrführungskanals (6) angeordneten Dichtelements (12) angeordnet ist, dass die in dem ersten Rohrführungskanal (6) des zweiten Rohrleitungspanels (1b) aufgenommene Anbinderohrleitung gegen das Dichtelement (12) verklemmend gehalten ist.

## Claims

1. A pipe conduit panel (1) for guiding at least one connecting pipe of an underfloor heating system, comprising
a laying plate (2) into which at least one first pipe guide channel (6) that is open towards the upper side (4) of the laying plate (2) is brought in for receiving a connecting pipe, wherein the first pipe guide channel (6) comprises at least one routing section having a section start (9) and a section end (10), **characterized in that** the first pipe guide channel (6) is formed such from the section start (9) to the section end (10) that a connecting pipe laid in the first pipe guide channel (6) is transferred from a first laying plane (7) at the section start (9) into a second laying plane (8) at the section end (10) relative to the upper side (4).

2. The pipe conduit panel (1) according to claim 1, wherein the first laying plane (7) extends to be offset in parallel from the upper side (4), and the second laying plane (8) coincides with the upper side (4) of the laying plate (2).

3. The pipe conduit panel (1) according to claim 1 or 2, wherein the first pipe guide channel (6) extends from a first front edge (3a) of the laying plate (2) in the direction of a second front edge (3b) or up to the second front edge (3b) of the laying plate (2).

4. The pipe conduit panel (1) according to claim 3, wherein the first front edge (3a) of the laying plate (2) comprises the section start (9).

5. The pipe conduit panel (1) according to any one of the preceding claims, wherein the first pipe guide channel (6) comprises a sealing member (12) which is formed such that the sealing member (12) in a state, where a connecting pipe is received within the first pipe guide channel (6), is arranged between the received connecting pipe and the first pipe guide channel (6) and, together with the received connecting pipe, seals the first pipe guide channel (6) against a fluid in an extension direction.

6. The pipe conduit panel (1) according to claim 5, wherein in the area of the sealing member (12), one or more holding slits (15) or holding openings are introduced, into which a holding element (16) can be introduced and can hold a connecting pipe received within the first pipe guide channel (6) in a jamming manner against the sealing member (12).

7. The pipe conduit panel (1) according to any one of the preceding claims, wherein the laying plate (2) is made of an insulating material.

8. The pipe conduit panel (1) according to claim 7, wherein the laying plate (2) is formed of at least two layers (2a, 2b) arranged one above the other, wherein the layers (2a, 2b) each comprise a different insulating material.

9. The pipe conduit panel (1) according to any one of the preceding claims, wherein the laying plate (2) on a lower side (5) opposite the upper side (4) is formed to be self-adhesive.

10. The pipe conduit panel (1) according to any one of the preceding claims, wherein the laying plate (2) is formed to be fluid-tight.

11. The pipe conduit panel (1) according to any one of the preceding claims, wherein at least one second pipe guide channel (14) that is open towards the upper side (4) is introduced into the laying plate (2) for receiving a connecting pipe, which second pipe guide channel extends substantially in parallel to the upper side (4).

12. The pipe conduit panel (1) according to claim 11, wherein the second pipe guide channel (14) extends from a third front edge (3c) of the laying plate (2) to the first front edge (3a), the second front edge (3b) and/or a fourth front edge (3d) of the laying plate (2).

13. The pipe conduit panel (1) according to any one of the preceding claims, wherein the one or the more pipe guide channels (6, 14) are formed for receiving multi-layer composite pipes or plastic pipes having a diameter of 14 mm or 16 mm.

14. A floor construction (30) for an underfloor heating, comprising a first pipe conduit panel (1a) and a second pipe conduit panel (1b) each according to any one of claims 11 to 13, as well as a connecting pipe for a tempering medium in fluid form, wherein the first pipe conduit panel and the second pipe conduit panel are arranged next to each other in such a way that
- the second pipe guide channel (14) of the first pipe conduit panel (1a) merges seamlessly into the first pipe guide channel (6) of the second pipe conduit panel (1b), and
- the connecting pipe is received within the second pipe guide channel (14) of the first pipe conduit panel (1a) and within the first pipe guide channel (6) of the second pipe conduit panel (1b) such that the connecting pipe extends within the first pipe conduit panel (1a) in a first laying plane (7) and is transferred from the first laying plane (7) into a second laying plane (8) by means of the second pipe conduit panel (1b).

15. The floor construction (30) according to claim 14, wherein the connecting pipe is fixed to the second pipe conduit panel (1b) by at least one holding element (16) arranged such in the area of a sealing member (12) arranged in the first pipe guide channel (6) that the connecting pipe received within the first pipe guide channel (6) of the second pipe conduit panel (1b) is held against the sealing member (12) in a jamming manner.

## Revendications

1. Ensemble de conduites (1) destiné à guider au moins une conduite de liaison d'un système de chauffage au sol, présentant
une plaque de pose (2) dans laquelle au moins un premier canal de guidage de tube (6) ouvert vers un côté supérieur (4) de la plaque de pose (2) est ménagé pour recevoir une conduite de liaison, sachant que le premier canal de guidage de tube (6) présente au moins un section de tracé avec un début de section (9) et une fin de section (10), **caractérisé en ce que** le premier canal de guidage de tube (6) est constitué depuis le début de section (9) jusqu'à la fin de section (10) de telle manière qu'une conduite de liaison posée dans le premier canal de guidage de tube (6) soit transférée d'un premier plan de pose (7) au début de section (9) à un deuxième plan de pose (8) à la fin de section (10) par rapport au côté supérieur (4).

2. Ensemble de conduites (1) selon la revendication 1, sachant que le premier plan de pose (7) présente un tracé parallèle décalé par rapport au côté supérieur (4) et le deuxième plan de pose (8) coïncide avec le côté supérieur (4) de la plaque de pose (2).

3. Ensemble de conduites (1) selon la revendication 1 ou 2, sachant que le premier canal de guidage de tube (6) passe depuis une première arête frontale (3a) de la plaque de pose (2) en direction d'une deuxième arête frontale (3b) ou jusqu'à la deuxième arête frontale (3b) de la plaque de pose (2) .

4. Ensemble de conduites (1) selon la revendication 3, sachant que la première arête frontale (3a) de la plaque de pose (2) présente le début de section (9).

5. Ensemble de conduites (1) selon l'une des revendications précédentes, sachant que le premier canal de guidage de tube (6) présente un élément d'étanchéité (12), lequel est constitué de telle manière que l'élément d'étanchéité (12), dans un état dans lequel une conduite de liaison est reçue dans le premier canal de guidage de tube (6), soit disposé entre la conduite de liaison reçue et le premier canal de guidage de tube (6) et étanchéifie, conjointement avec la conduite de liaison reçue, le premier canal de guidage de tube (6) par rapport à un fluide dans une direction de passage.

6. Ensemble de conduites (1) selon la revendication 5, sachant que, dans la zone de l'élément d'étanchéité (12), une ou plusieurs fentes (15) ou ouvertures de maintien sont ménagées, dans lesquelles un élément de maintien (16) peut être inséré et maintenir une conduite de liaison reçue dans le premier canal de guidage de tube (6) en la calant contre l'élément d'étanchéité (12).

7. Ensemble de conduites (1) selon l'une des revendications précédentes, sachant que la plaque de pose (2) est fabriquée dans un matériau isolant.

8. Ensemble de conduites (1) selon la revendication 7, sachant que la plaque de pose (2) est constituée d'au moins deux couches (2a, 2b) superposées, sachant que les couches (2a, 2b) présentent un matériau isolant respectivement différent.

9. Ensemble de conduites (1) selon l'une des revendications précédentes, sachant que la plaque de pose (2) est constituée de manière autocollante sur un côté inférieur (5) opposé au côté supérieur (4).

10. Ensemble de conduites (1) selon l'une des revendications précédentes, sachant que la plaque de pose (2) est constituée de manière étanche aux fluides.

11. Ensemble de conduites (1) selon l'une des revendications précédentes, sachant qu'au moins un deuxième canal de guidage de tube (14) ouvert vers le côté supérieur (4) et sensiblement parallèle au côté supérieur (4) est ménagé dans la plaque de pose (2) pour recevoir une conduite de liaison.

12. Ensemble de conduites (1) selon la revendication 11, sachant que le deuxième canal de guidage de tube (14) passe d'une troisième arête frontale (3c) de la plaque de pose (2) à la première arête frontale (3a), la deuxième arête frontale (3b) et/ou une quatrième arête frontale (3d) de la plaque de pose (2).

13. Ensemble de conduites (1) selon l'une des revendications précédentes, sachant que le ou les canaux de guidage de tube (6, 14) sont constitués pour recevoir des tubes composites multicouche ou des tubes en matière plastique d'un diamètre de 14 mm ou de 16 mm.

14. Structure de sol (30) pour un chauffage au sol, présentant un premier ensemble de conduites (1a) et un deuxième ensemble de conduites (1b) respectivement selon l'une des revendications 11 à 13 ainsi qu'au moins une conduite de liaison pour un agent de régulation de température fluide, sachant que le premier ensemble de conduites et le deuxième ensemble de conduites sont disposés l'un auprès l'autre de telle manière que
- le deuxième canal de guidage de tube (14) du premier ensemble de conduites (1a) se prolonge sans soudure par le premier canal de guidage de tube (6) du deuxième ensemble de conduites (1b), et
- la conduite de liaison soit reçue dans le deuxième canal de guidage de tube (14) du premier ensemble de conduites (1a) et dans le premier canal de guidage de tube (6) du deuxième ensemble de conduites (1b) de telle sorte que la conduite de liaison dans le premier ensemble de conduites (1a) passe dans un premier plan de pose (7) et soit transférée du premier plan de pose (7) à un deuxième plan de pose (8) moyennant le deuxième ensemble de conduites (1b).

15. Structure de sol (30) selon la revendication 14, sachant que la conduite de liaison est fixée au deuxième ensemble de conduites (1b) via au moins un élément de maintien (16), lequel est disposé au niveau d'un élément d'étanchéité (12) disposé dans le premier canal de guidage de tube (6) de telle manière que la conduite de liaison reçue dans le premier canal de guidage de tube (6) du deuxième ensemble de conduites (1b) soit maintenue en étant calée contre l'élément d'étanchéité (12).
